# EUROPEAN PATENT SPECIFICATION

(11) **EP 1 763 262 B1**
(45) Date of publication and mention of the grant of the patent: **03.09.2008**
(21) Application number: 05019784.7
(22) Date of filing: 12.09.2005
(51) Int. Cl.: H04Q 7/22, H04Q 7/38

(54) **Short message delivery for terminals that roam between GSM and VoIP system**
Kurznachrichtenzustellung an Teilnehmerendgeräte zur Durchführung von Roaming zwischen einem GSM und einem VoIP System unterstützen
Distribution de messages courts pour des terminaux itinérants entre GSM et VoiP

(43) Date of publication of application: 14.03.2007
(73) Proprietor: Nokia Siemens Networks GmbH & Co. KG, 81541 München (DE)
(72) Inventor: Vogel, Arnim, 10407 Berlin (DE)

(56) References cited:
- WO-A-20/04107788
- US-A1- 2004 219 935
- 3GPP: "Voice Call Continuity between CS and IMS Study (Release 7)" 3GPP TR 23.806 V1.4.0, [Online] August 2005 (2005-08), page 1-15,32-33,41, XP002359017 Retrieved from the Internet: URL:www.3gpp.org> [retrieved on 2005-12-14]
- 3GPP: "Support of SMS and MMS over generic 3GPP IP access (Release 7)" 3GPP TR 23.804 (V7.0.0), [Online] June 2005 (2005-06), pages 1-24, XP002359018 Sophia Antipolis, France Retrieved from the Internet: URL:www.3gpp.org> [retrieved on 2005-12-14]

## Description

### Background

3GPP document TR 23.806 V1.4.0 "Voice Call Continuity between CS and IMS Study" discloses a terminal device indicating to a call continuity control function in a packet switched domain of its current circuit switched status (detach/attached-idle/attached-active) after a registration is performed.

A US patent application 20040219935 discloses that for subscribers of multiple protocols, the registration status is tracked in one or more of the protocols. When a location query message for a subscriber of multiple protocols is received, it is determined whether the subscriber is registered according to the tracked protocol.

3GPP document TR 23.804 V7.0.0 "Support of SMS and MMS over generic 3GPP IP access" describes solutions for providing 3GPP messaging services across WLAN, and, across any form of IP access that is part of the 3GPP system.

### 1. Problem to be solved by the invention

With the appearance of Mobile Terminals, for example Dual Mode Handhelds, that support 802.11 WLAN as well as GSM radio, it is possible to use Voice over IP (VoIP) in parallel to GSM to provide telephony services.
Now one can use the advantages of both technologies for voice calls: GSM can be used in areas where no WLAN coverage is available, while WLAN is used in areas where GSM must not be used (e.g. in hospitals), where GSM coverage is poor (e.g. inside buildings in certain areas), or where the use of less costly equipment is desired (e.g. in residential areas, in which the mobile phone shall become the "Home phone" as well, however not at the cost of adding expensive GSM radio capacity).
The abovementioned features are used by a "Voice Call Continuity Service" that allows the handheld to place or receive calls while in the GSM, the WLAN (i.e. VoIP), or in both. As a precondition, these phones register in the GSM network, in a VoIP network, or in both networks in parallel. Based on this registration information, calls towards this new type of phones can be routed via GSM or via VoIP techniques.
Another important service apart from the voice call is the Short Message Service (SMS). In the context of Voice Call Continuity, especially the part of the SMS procedure that deals with the receipt of Short Messages by the terminal needs to be considered. With Dual Mode Handhelds, a new situation exists: Dual Mode Handhelds could be registered in a VoIP system (WLAN), but may not necessarily be registered in the GSM in parallel.

Today's GSM Short Message Service has, however, not been designed to interoperate with a Voice over IP service. As a consequence, those terminals wouldn't receive any SMS as long as they are not registered in the GSM.

This invention describes a method or service entity by which Dual Mode Handhelds will receive short messages while registered in a VoIP system (e.g. an IMS).

### 2. Problem to be solved by the invention with regard to the state of the art

To understand the solution, one must be familiar with the procedure that is used today by GSM networks to deliver short messages:
1. A terminal that *sends* an SMS will do so by contacting its configured Short Message Center (SMSC) and forwarding the SMS to the center. The center is now responsible for the final delivery to its recipient.
2. In order to deliver the message, the SMSC will contact the recipient's network's Home Location Register (HLR) for the present location of the mobile terminal of the recipient. It does so by sending the Mobile Application Part (MAP) message "MAP_SEND_ROUTING_INFO_FOR_SM" using the recipients Mobile Station ISDN Number (MSISDN) to address the HLR.
3. The HLR will respond to the SMSC with the Visited Mobile Switching Center (VMSC) address, where the terminal is registered.
   This information is known to the HLR, since a terminal registers in the GSM network (by executing the MAP:
   Location Update procedure). When the terminal roams through the GSM network, the HLR gets informed about any
   VLR (VMSC) change that takes place, thus keeping track of the location of the terminal.
4. Using this information, the SMSC will deliver the message using the "MAP_FORWARD_SHORT_MESSAGE" message to the VMSC.
5. The VMSC will deliver the message to the terminal, and will report success or failure by sending the MAP_FORWARD_SHORT_MESSAGE_ACK" back to the SMSC

Since there was no GSM - VoIP roaming, the problem how to deliver SMS while in a VoIP network did not exist before. Voice Call Continuity is, however, being discussed in the 3GPP SA2: A proposal "Original Domain Control model" has been discussed that uses a Mobility Management Service ("Call Continuity Control Function" CCCF), which
- Is located in a VoIP network (the IMS) and
- Behaves like a GSM VMSC to the GSM network

This Mobility Management Service executes a MAP Location Update procedure on behalf of the terminal when it is notified about a registration of the terminal in the IMS. This causes Short Messages to be routed to the Mobility Management Service, which in turn can forward those messages to the terminal using VoIP means (e.g. SIP: Message messages).

The disadvantage of this approach is, however, that the terminal cannot register in a GSM and in the VoIP network (the IMS) in parallel: Each registration of the terminal in the IMS would cause the Mobility Management Service to execute the Location Update procedure on behalf of the terminal. This, however, causes the direct GSM registration of the terminal to be cancelled by the GSM network (HLR).

A registration of the terminal in both networks VoIP (IMS) and GSM in parallel is, however, required to allow better support for hand-over of voice calls between the two domains. Without a Mobility Management Service executing the MAP Location Update procedure on behalf of the terminal, if the terminal is registered in the VoIP network (IMS) but not in the GSM, Short message delivery according to the GSM standard will fail: From the GSM networks perspective, the terminal is not registered any longer; therefore, Short Messages will not be delivered to it.

### 3. Solution of the problem according to the invention

The new mechanism relies on an entity in the VoIP network (IMS) that acts on behalf of the terminal. It does so, however, only in situations in which the terminal is not registered in the GSM but is registered in the VoIP network (IMS).

So for the new service entity according to the invention (in the following designated shortly as MM Service or MOMS) it is not sufficient to know the terminal has gained WLAN (IMS) registration to initiate the Location Update procedure, since initiation of the Location Update procedure would end the terminal's GSM registration.

Therefore, this invention teaches to exchange detailed registration state information between the terminal and the MOMS such, that the MOMS is hold up to date, whether the terminal has a GSM registration in parallel to the VoIP registration. If the terminal has no GSM registration in parallel to the VoIP registration, for example because the terminal has ended GSM registration or has been canceled due to a loss of GSM coverage (e.g. in a building), or due to reasons such as sojourning in an area in which GSM must not be used (e.g. a hospital), the MOMS acts on behalf of the terminal and executes the Location Update procedure.

The invention is now described in more detail.
1. After a terminal attaches to a WLAN (i.e. establishing radio connection and joining the IP network), it will start a registration procedure to its VoIP home network that becomes accessible through the WLAN.
   In our specific case, this home network will be an "IP Multimedia Subsystem" (IMS); however the method is not limited to an IMS as the VoIP infrastructure.
   In the IMS scenario, however, this takes place by the terminal performing a registration procedure with the IMS.
2. The registration information is forwarded to a service that has been introduced to provide mobility management for Dual Mode Handhelds. This Mobility Management Service (MOMS) is now aware that the terminal is attached through WLAN, however does not know whether it is attached through GSM.
   Therefore, the service subscribes to an event package "Mobility Events" (SIP Event Notification mechanism according to "RFC 3265 - Session Initiation Protocol (SIP)-Specific Event Notification") which is designed to transport detailed registration information from the Dual Mode Handheld to the Mobility Management service (i.e. the MOMS subscribes for Mobility Events in the Dual Mode Handheld)
3. On receipt of the subscription from the MOMS, the terminal will notify the service about its current registration state with regard to the GSM network. From now on the service is aware, whether the terminal has a GSM registration in parallel to the WLAN registration.
4. If the terminal indicates it has no GSM registration, the MOMS will act on behalf of the terminal and will execute the Location Update procedure with the GSM network's HLR. This is achieved by the MOMS using its MAP interfaces to communicate with the GSM network.
   As a consequence of this procedure, the HLR in the GSM network will consider the MOMS as the "VMSC" where the terminal is registered, and will forward all requests with regard to short message delivery to the MOMS
5. If an SMS is received by the MOMS (playing the role of a VMSC), the SMS will be forwarded to the terminal using VoIP features.
   In our specific scenario, the "SIP: Message" method can be used to deliver the SMS to the terminal while it is registered via WLAN
6. If the terminal (re-)registers in the GSM, it will notify the MOMS about this fact using an event from the event package.
   Registering in the GSM means to execute the "Location Update" procedure. When the Dual Mode Handheld does so, the HLR gets informed about the new location of the terminal; Short Messages will from now on be delivered (again) to the terminal using the existing GSM mechanisms.
   In addition, the old location (i.e. the MOMS in the role of a VMSC) is notified by the HLR through the Cancel location procedure and therefore recognizes a 2^{nd} time that the terminal has gained GSM coverage again

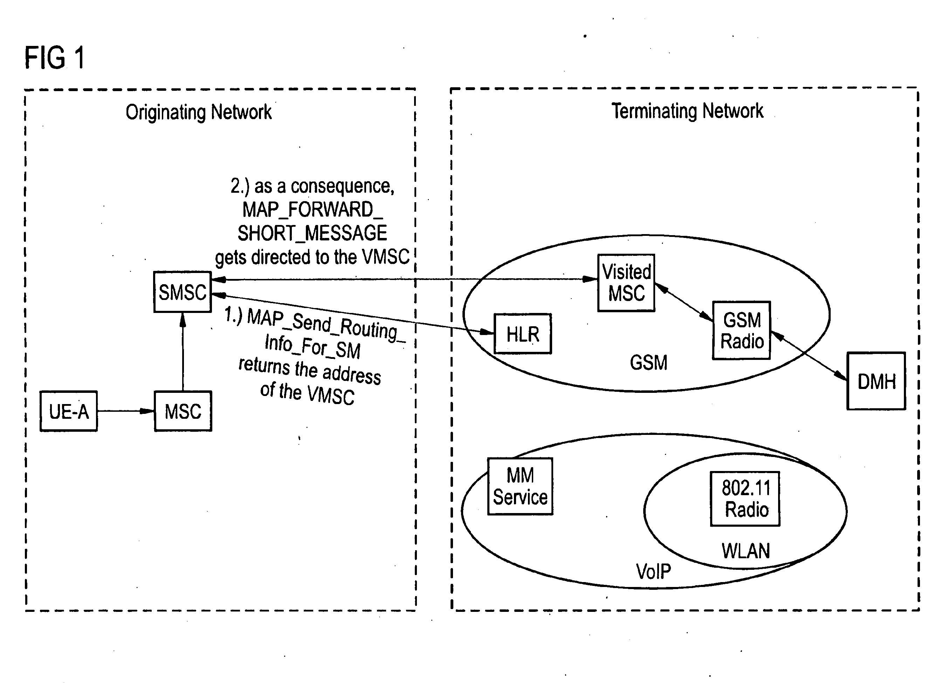

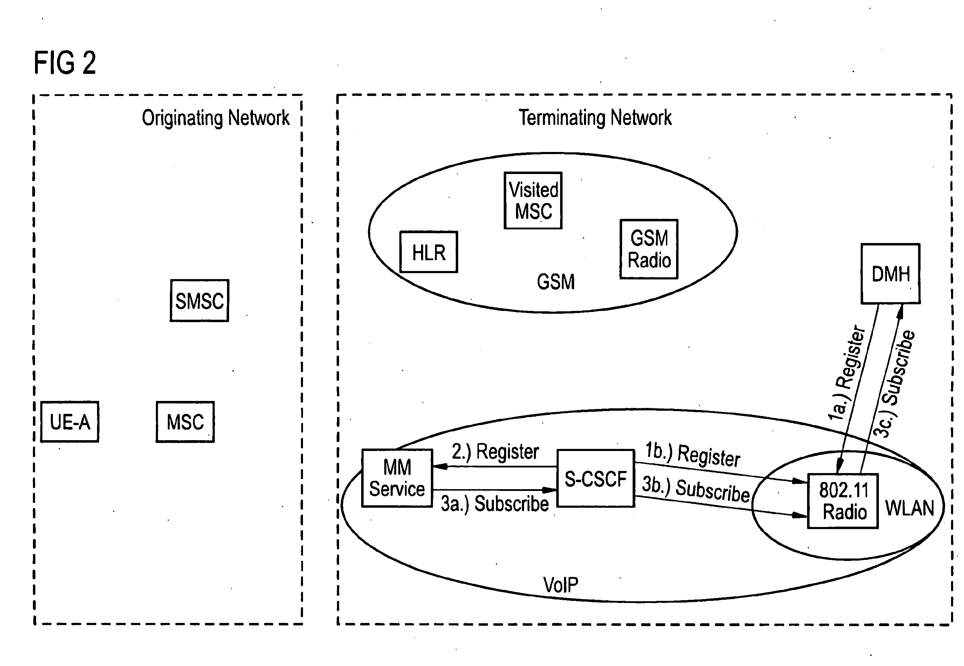

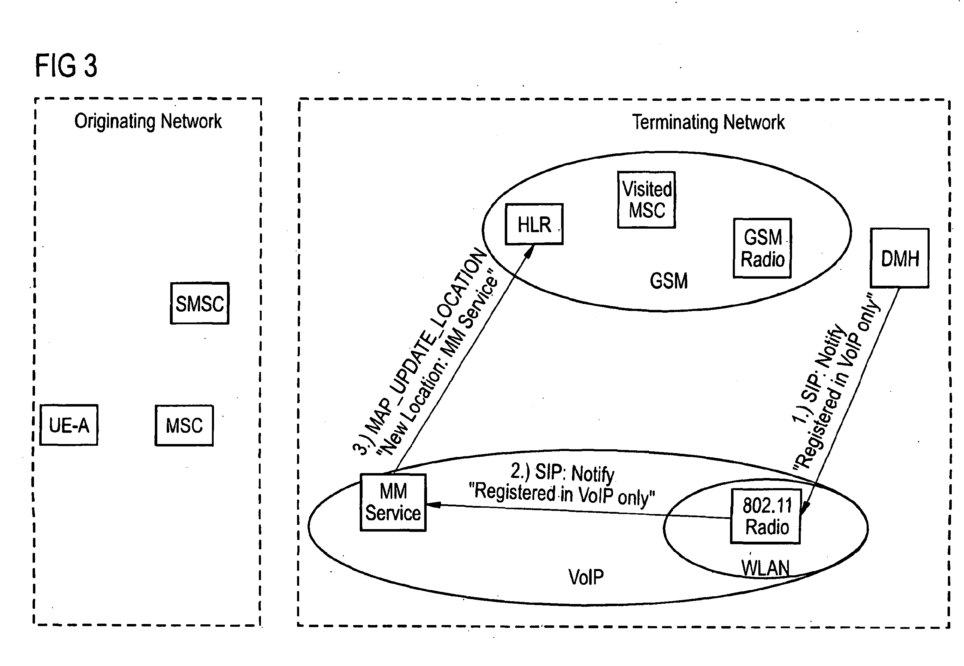

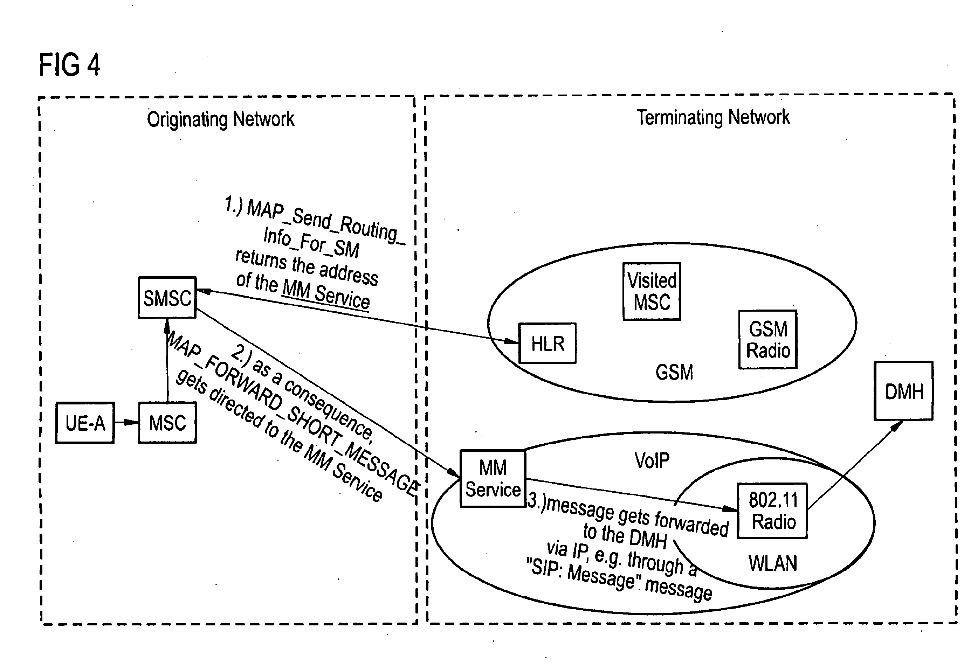

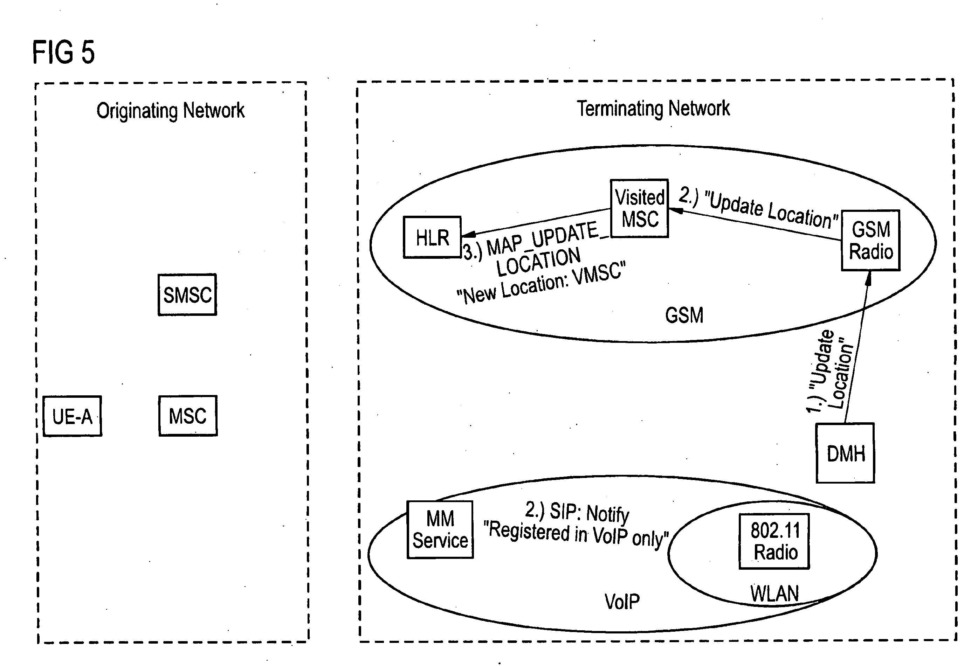

In the following the enclosed figures 1-5, showing the old handling and the invention, are shortly described.
Fig.1: Old handling: SMS is received by a terminal registered in the GSM
Fig.2-5: Invention: SMS is received by a terminal registered in the VoIP system
Fig.2:
   1a.) and 1b.): the DMH registers to the VoIP network
   2.): the registration information is forwarded to the MM Service
   3a.), 3b.) and 3c.): the service subscribes to an event package "Mobility Events" which is designed to transport detailed registration information from the Dual Mode Handheld to the Mobility Management service
Fig.3:
   MOMS performs "MAP: Location Update" only if the Dual Mode Handheld is registered in the VoIP network but not in the GSM
Fig.4:
   Subsequently, all incoming Short Messages are routed to the MOMS
Fig.5:
   If the Dual Mode Handheld re-establishes GSM registration, its VMSC executes the "Update Location" procedure. From now on, the Dual Mode Handheld will receive Short Messages again directly from the GSM network (as shown in Fig.1)

## Claims

1. Service Entity in a voice over IP (VoIP) network, comprising means for
• receiving registration information of a registration taking place between a terminal (DMH) and his voice over IP (VoIP) home network, said terminal supporting voice over IP (VoIP) home network as well as GSM network,
• requesting said terminal to hold the service entity up to date with regard to its GSM registration, **characterized in that** the service entity further comprises means for
• updating a GSM network's home location register (HLR) of said terminal only if the terminal has voice over IP (VoIP) network registration and has no GSM registration, such that a request with regard to a short message delivery to said terminal are forwarded to said service entity, and
• forwarding said received request with regard to the short message delivery to said terminal.

2. Service Entity according to claim 1, wherein said VoIP network comprises IP multimedia subsystem.

3. Service Entity according to claim 1 or 2, wherein forwarding said request with regard to the short message delivery to said terminal comprises forwarding the short message using session initiation protocol (SIP).

4. Service Entity according claim 3, wherein forwarding said request with regard to the short message delivery to said terminal comprises forwarding the short message using a message method of session initiation protocol (SIP).

5. Service Entity according to any of claims 1 to 4, wherein requesting said terminal to hold the service entity up to date with regard to its GSM registration is realized using session initiation protocol (SIP).

6. Service Entity according to any of claims 1 to 4, wherein requesting said terminal to hold the service entity up to date with regard to its GSM registration comprises subscribing to an mobility event package of session initiation protocol (SIP).

7. Service Entity according to any of claims 1 to 6, further comprising means for receiving from said terminal a notification about its current registration state with regard to the GSM network.

8. Service Entity according to claim 7, wherein receiving from said terminal the notification about the current registration state comprises receiving a Notify according to session initiation protocol.

9. Service Entity according to any of claims 1 to 8 wherein said updating the GSM network's home location register (HLR) comprises updating the home location register (HLR) such that the home location register (HLR) will consider the service entity as a visited mobile switching center (VMSC) where the terminal is registered.

10. Method for the delivery of a short message to terminals supporting voice over IP (VoIP) network and GSM radio, comprising the steps of:
• providing information about voice over IP (VoIP) network registration of a terminal to a special service (MM Service),
• requesting the terminal by said service to hold the service up to date with regard to its GSM registration, **characterized in that** the method further comprises
• updating a home location register (HLR) of said terminal by said service only if the terminal has voice over IP (VoIP) network registration but no GSM registration, such that a request with regard to a short message delivery to said terminal are forwarded to said service, and
• forwarding said request with regard to the short message delivery to said terminal by said service.

11. Method of claim 10, wherein
said VoIP home network registration of said terminal is realized via WLAN.

12. Method of claim 10, wherein said step of requesting the terminal by said service to hold the service up to date with regard to its GSM registration is realized by session initiation protocol (SIP).

13. Method of any of claims 10 - 12, wherein
said step of requesting the terminal by said service to tell said service whether the terminal has a GSM registration in parallel to the VoIP network registration is realized by using the SIP Event Notification mechanism according to "RFC 3265 - Session Initiation Protocol (SIP)-Specific Event Notification".

14. Method of any of claims 10 - 13, wherein forwarding said request with regard to the short message delivery to said terminal comprises forwarding the short message using session initiation protocol (SIP).

15. Method of claim 14, wherein forwarding said request with regard to the short message delivery to said terminal comprises forwarding the short message using a message method of session initiation protocol (SIP).

16. Method of any of claims 10 to 15, further comprising receiving from said terminal a notification about its current registration state with regard to the GSM network.

17. Method of claim 16, wherein receiving from said terminal the notification about the current registration state comprises receiving a Notify according to session initiation protocol.

18. Method of any of claims 10 to 17 wherein said updating the home location register (HLR) of said terminal comprises updating the home location register (HLR) such that the home location register (HLR) will consider the service entity as a visited mobile switching center (VMSC) where the terminal is registered.

## Patentansprüche

1. Dienstinstanz in einem VoIP-Netz (Voice over IP - Internet-Telefonienetz) mit Mitteln zum
• Empfangen von Registrierungsinformationen einer zwischen einem Endgerät (DMH) und seinem VoIP-Heimatnetz stattfindenden Registrierung, wobei dieses Endgerät das VoIP-Heimatnetz wie auch das GSM-Netz unterstützt,
• Auffordern des Endgeräts, die Dienstinstanz hinsichtlich seiner GSM-Registrierung auf aktuellem Stand zu halten, **dadurch gekennzeichnet, daß** die Dienstinstanz weiterhin Mittel umfaßt zum
• Aktualisieren eines Heimatregisters (HLR) des GSM-Netzes für das Endgerät, nur wenn das Endgerät VoIP-Netzregistrierung aufweist und keine GSM-Registrierung aufweist, so daß eine Anforderung hinsichtlich einer Kurznachrichtenzustellung an das Endgerät zu der Dienstinstanz weitergeleitet werden, und
• Weiterleiten der empfangenen Anforderung hinsichtlich der Kurznachrichtenzustellung an das Endgerät.

2. Dienstinstanz nach Anspruch 1, wobei das VoIP-Netz ein IP-Multimedien-Subsystem umfaßt.

3. Dienstinstanz nach Anspruch 1 oder 2, wobei Weiterleiten der Anforderung hinsichtlich der Kurznachrichtenzustellung an das Endgerät Weiterleiten der Kurznachricht unter Verwendung des SIP-Protokolls (Session Initiation Protocol) umfaßt.

4. Dienstinstanz nach Anspruch 3, wobei Weiterleiten der Anforderung hinsichtlich der Kurznachrichtenzustellung an das Endgerät Weiterleiten der Kurznachricht unter Verwendung eines Nachrichtenverfahrens des SIP-Protokolls (Session Initiation Protocol) umfaßt.

5. Dienstinstanz nach einem der Ansprüche 1 bis 4, wobei Auffordern des Endgeräts, die Dienstinstanz hinsichtlich seiner GSM-Registrierung auf aktuellem Stand zu halten, unter Verwendung des SIP-Protokolls (SIP) realisiert wird.

6. Dienstinstanz nach einem der Ansprüche 1 bis 4, wobei Auffordern des Endgeräts, die Dienstinstanz hinsichtlich seiner GSM-Registrierung auf aktuellem Stand zu halten, Teilnahme an einer Mobilitätsereignispackung des SIP-Protokolls (Session Initiation Protocol) umfaßt.

7. Dienstinstanz nach einem der Ansprüche 1 bis 6, weiterhin mit Mitteln zum Empfangen von dem Endgerät einer Benachrichtigung über seinen aktuellen Registrierungszustand hinsichtlich des GSM-Netzes.

8. Dienstinstanz nach Anspruch 7, wobei Empfangen von dem Endgerät der Benachrichtigung über den aktuellen Registrierungszustand Empfangen eines großen Notify gemäß dem SIP-Protokoll umfaßt.

9. Dienstinstanz nach einem der Ansprüche 1 bis 8, wobei das Aktualisieren des Heimatregisters (HLR) des GSM-Netzes Aktualisieren des Heimatregisters (HLR) umfaßt, so daß das Heimatregister (HLR) die Dienstinstanz als eine besuchte Mobilvermittlungsstelle (VMSC -Visited Mobile Switching Center) betrachtet, wo das Endgerät registriert ist.

10. Verfahren zur Zustellung einer Kurznachricht an VoIP-Netz (Voice over IP) und GSM-Funk unterstützende Endgeräte, mit folgenden Schritten:
• Bereitstellen von Informationen über VoIP-Netzregistrierung (Voice over IP) eines Endgeräts für einen besonderen Dienst (MM-Dienst),
• Auffordern des Endgeräts durch diesen Dienst, den Dienst hinsichtlich seiner GSM-Registrierung auf dem aktuellen Stand zu halten,
**dadurch gekennzeichnet, daß** das Verfahren weiterhin folgendes umfaßt
• Aktualisieren eines Heimatregisters (HLR) des Endgeräts durch den Dienst, nur wenn das Endgerät VoIP-Netzregistrierung aufweist, aber keine GSM-Registrierung, so daß eine Anforderung hinsichtlich einer Kurznachrichtenzustellung an das Endgerät zu dem Dienst weitergeleitet wird, und
• Weiterleiten dieser Anforderung hinsichtlich der Kurznachrichtenzustellung an das Endgerät durch den Dienst.

11. Verfahren nach Anspruch 10, wobei die VoIP-Heimatnetzregistrierung des Endgeräts über WLAN realisiert wird.

12. Verfahren nach Anspruch 10, wobei der Schritt des Aufforderns des Endgeräts durch den Dienst, den Dienst hinsichtlich seiner GSM-Registrierung auf aktuellem Stand zu halten, durch SIP-Protokoll (Session Initiation Protocol) realisiert wird.

13. Verfahren nach einem der Ansprüche 10-12, wobei der Schritt des Aufforderns des Endgeräts durch den Dienst, dem Dienst mitzuteilen, ob das Endgerät parallel zu der VoIP-Netzregistrierung eine GSM-Registrierung aufweist, durch Verwendung des SIP-Mechanismus Event Notification (Ereignisbenachrichtigung) gemäß "RFC 3265 - Session Initiation Protocol (SIP) - Specific Event Notification" realisiert wird.

14. Verfahren nach einem der Ansprüche 10-13, wobei Weiterleiten der Anforderung hinsichtlich der Kurznachrichtenzustellung an das Endgerät Weiterleiten der Kurznachricht unter Verwendung des SIP-Protokolls (Session Initiation Protocol) umfaßt.

15. Verfahren nach Anspruch 14, wobei Weiterleiten der Anforderung hinsichtlich der Kurznachrichtenzustellung an das Endgerät Weiterleiten der Kurznachricht unter Verwendung eines Nachrichtenverfahrens des SIP-Protokolls (Session Initiation Protocol) umfaßt.

16. Verfahren nach einem der Ansprüche 10 bis 15, weiterhin mit Empfangen von dem Endgerät einer Benachrichtigung über seinen aktuellen Registrierungszustand hinsichtlich des GSM-Netzes.

17. Verfahren nach Anspruch 16, wobei Empfangen von dem Endgerät der Benachrichtigung über den aktuellen Registrierungszustand Empfangen einer Notify gemäß dem SIP-Protokoll (Session Initiation Protocol) umfaßt.

18. Verfahren nach einem der Ansprüche 10 bis 17, wobei das Aktualisieren des Heimatregisters (HLR) des Endgeräts Aktualisieren des Heimatregisters (HLR) umfaßt, so daß das Heimatregister (HLR) die Dienstinstanz als eine besuchte Mobilvermittlungsstelle (VMSC - Visited Mobile Switching Center) erachtet, wo das Endgerät registriert ist.

## Revendications

1. Entité de Service dans un réseau de voix sur IP (VoIP) comprenant des moyens pour
• recevoir des informations d'enregistrement d'un enregistrement se faisant entre un terminal (DMH) et son réseau domestique de voix sur IP (VoIP), ledit terminal supportant un réseau domestique de voix sur IP (VoIP) ainsi qu'un réseau GSM,
• demander audit terminal de maintenir l'entité de service à jour en ce qui concerne son enregistrement GSM,
**caractérisé en ce que** l'entité de service comprend en outre des moyens pour
• mettre à jour un registre de localisation nominal (HLR) de réseau GSM dudit terminal uniquement si le terminal a un enregistrement de réseau de voix sur IP (VoIP) et n'a pas d'enregistrement de GSM, de telle sorte qu'une demande relative à une distribution de message court audit terminal est acheminée jusqu'à ladite entité de service, et
• acheminer ladite demande reçue relative à la distribution du message court jusqu'audit terminal.

2. Entité de Service selon la revendication 1, dans laquelle ledit réseau VoIP comprend un sous-système multimédia sur IP.

3. Entité de Service selon la revendication 1 ou 2, dans laquelle acheminer ladite demande relative à la distribution du message court jusqu'audit terminal comprend d'acheminer le message court en utilisant le protocole d'initiation de session (SIP).

4. Entité de Service selon la revendication 3, dans laquelle acheminer ladite demande relative à la distribution du message court jusqu'audit terminal comprend d'acheminer le message court en utilisant un procédé de message du protocole d'initiation de session (SIP).

5. Entité de Service selon l'une quelconque des revendications 1 à 4, dans laquelle la demande audit terminal de maintenir l'entité de service à jour en ce qui concerne son enregistrement GSM est réalisée en utilisant le protocole d'initiation de session (SIP).

6. Entité de Service selon l'une quelconque des revendications 1 à 4, dans laquelle la demande audit terminal de maintenir l'entité de service à jour en ce qui concerne son enregistrement GSM comprend de s'abonner à une offre d'événements de mobilité du protocole d'initiation de session (SIP).

7. Entité de Service selon l'une quelconque des revendications 1 à 6, comprenant en outre un moyen pour recevoir dudit terminal une notification relative à son état d'enregistrement actuel pour ce qui concerne le réseau GSM.

8. Entité de Service selon la revendication 7, dans laquelle la réception dudit terminal de la notification relative à l'état d'enregistrement actuel comprend de recevoir une Notification selon le protocole d'initiation de session.

9. Entité de Service selon l'une quelconque des revendications 1 à 8 dans laquelle ladite mise à jour du registre de localisation nominal (HLR) de réseau GSM comprend de mettre à jour le registre de localisation nominal (HLR) de telle manière que le registre de localisation nominal (HLR) considèrera l'entité de service comme un centre de commutation mobile visité (VMSC) où le terminal est enregistré.

10. Procédé pour la distribution d'un message court à des terminaux supportant un réseau de voix sur IP (VoIP) et un réseau radio GSM, comprenant les étapes de :
• fournir des informations relatives à l'enregistrement sur un réseau de voix sur IP (VoIP) d'un terminal à un service spécial (Service MM),
• demander au terminal par l'intermédiaire dudit service de maintenir le service à jour en ce qui concerne son enregistrement GSM,
**caractérisé en ce que** le procédé comprend en outre
• mettre à jour un registre de localisation nominal (HLR) dudit terminal par ledit service uniquement si le terminal a un enregistrement au réseau de voix sur IP (VoIP) mais pas d'enregistrement au réseau GSM, de sorte qu'une demande relative à la distribution d'un message court audit terminal est acheminée jusqu'audit service, et
• acheminer ladite demande relative à la distribution du message court audit terminal par ledit service.

11. Procédé selon la revendication 10, dans lequel
ledit enregistrement au réseau de voix sur IP (VoIP) dudit terminal est réalisé par l'intermédiaire d'un WLAN.

12. Procédé selon la revendication 10, dans lequel ladite étape de demander au terminal par l'intermédiaire dudit service de maintenir le service à jour en ce qui concerne son enregistrement GSM est réalisée par le protocole d'initiation de session (SIP).

13. Procédé selon l'une quelconque des revendications 10 à 12, dans lequel
ladite étape de demander au terminal par l'intermédiaire dudit service de dire audit service si le terminal a un enregistrement GSM en parallèle à l'enregistrement au réseau de VoIP est réalisé en utilisant le mécanisme de Notification d'Événement SIP conformément à « RFC 3265 - Session Initiation Protocol (SIP) - Specific Event Notification ».

14. Procédé selon l'une quelconque des revendications 10 à 13, dans lequel acheminer ladite demande relative à la distribution du message court jusqu'audit terminal comprend d'acheminer le message court en utilisant le protocole d'initiation de session (SIP).

15. Procédé selon la revendication 14, dans lequel acheminer ladite demande relative à la distribution du message court jusqu'audit terminal comprend d'acheminer le message court en utilisant un procédé de message du protocole d'initiation de session (SIP).

16. Procédé selon l'une quelconque des revendications 10 à 15, comprenant en outre de recevoir dudit terminal une notification relative à son état d'enregistrement actuel pour ce qui concerne le réseau GSM.

17. Procédé selon la revendication 16, dans lequel recevoir dudit terminal la notification relative à l'état d'enregistrement actuel comprend de recevoir une Notification selon le protocole d'initiation de session.

18. Procédé selon l'une quelconque des revendications 10 à 17, dans lequel ladite mise à jour du registre de localisation nominal (HLR) dudit terminal comprend de mettre à jour le registre de localisation nominal (HLR) de telle manière que le registre de localisation nominal (HLR) considèrera l'entité de service comme un centre de commutation mobile visité (VMSC) où le terminal est enregistré.
